# EUROPEAN PATENT APPLICATION

(11) **EP 4 524 309 A1**
(43) Date of publication of application: **19.03.2025**
(21) Application number: 23866845.3
(22) Date of filing: 21.03.2023
(51) Int. Cl.: D04H 5/06, D04H 5/08, D01F 6/46, D01F 1/09

(54) **ANTISTATIC FLASH-SPUN COMPOSITE NON-WOVEN FABRIC AND PREPARATION METHOD THEREFOR**

(30) Priority: 20.09.2022 CN 202211146152
(71) Applicant: Dawnsens New Materials (Xiamen) Co., Ltd., Xiamen 361027 (CN)
(72) Inventor: LUO, Zhangsheng, Xiamen, Fujian 361026 (CN); SHAN, Lei, Xiamen, Fujian 361026 (CN)
(74) Representative: Valet Patent Services Limited
(86) International application number: PCT/CN2023/082811
(87) International publication number: WO 2024/060545

(57) **Abstract**

The present application relates to the field of non-woven fabric technology, particularly to an anti-static flash spinning composite non-woven fabric and a preparation method thereof. The preparation method includes the following steps, S1: taking anti-static functional masterbatch and a first polymer as spunbond raw materials, obtaining spunbonded fibre with the spunbond raw materials by a spunbond process, and forming a spunbonded fibre web by aggregating the spunbonded fibre; S2: taking a second polymer as a raw material, obtaining a flash spinning fiber web sheet by a flash spinning process; forming a flash spinning fiber layer by laying the flash spinning fiber web sheet on the spunbonded fibre web to obtain a composite fiber web; S3: performing a cold pressing treatment and a hot rolling treatment on the composite fiber web sequentially, causing the spunbonded fibre web to form a spunbond layer and causing the flash spinning fiber layer to form a flash spinning layer, that is, the flash spinning composite non-woven fabric . The flash spinning composite non-woven fabric produced by this method not only has anti-static performance, but also has high waterproof performance, high breathability, and good protective performance.

## Description

### TECHNICAL FIELD

The present disclosure relates to the field of non-woven fabric technologies, and in particular, to an anti-static flash spinning composite non-woven fabric and a preparation method thereof.

### BACKGROUND

According to the current national standard for protective clothing, "GB19082-2009 Technical Requirements for Medical Disposable Protective Clothing", materials used in medical protective clothing not only have excellent antibacterial properties, but also meet certain liquid barrier properties, breathability, and anti-static properties.

The existing protective clothing fabrics include: spunbond laminated fabric, SMS (spunbond - melt-blow - spunbond composite) fabric, and flash spinning non-woven fabric.

The spunbond laminated fabric, SMS (spunbond - melt-blow - spunbond composite) fabric are made by dry spinning process, which can be implemented by adding anti-static masterbatch or coating anti-static finishing agents on the fabric. The existing technology is relatively mature. However, the protective clothing fabric has the following drawbacks: the spunbond laminated fabrics have poor breathability, and the microporous membrane is easily worn out, which can lead to poor wearing comfort and protective risks when used in protective clothing; the breathability of the SMS (spunbond - melt-blow - spunbond composite) fabric is still acceptable, but its protective property is directly related to the number of fibers in the melt-blow layer. When there are more fibers, the protective property is good, and the mechanical property of the melt-blow fibers are poor (especially the bursting strength is poor), rendering them easy to be punctured and lose the protective property.

Although the flash spinning non-woven fabric has good protective property and breathability, it cannot be endowed with anti-static properties by adding an anti-static master batch.

**In** Chinese invention patent, entitled with "Improved Flash Spinning Sheet" with application number of CN98803051.9 and publicized on April 5, 2000, it is mentioned that applying an anti-static treatment agent in a form of an aqueous solution (such as potassium butyl sulfate) to the flash spinning non-woven fabric sheet and drying it with hot air can obtain a flash spinning non-woven fabric having anti-static effect. This method of endowing the flash spinning fabrics with anti-static properties through post-treatment, due to the excellent water repellent properties of the fabrics made from the flash spinning fiber (the anti-static pressure can be greater than 15kPa), it is required an addition of reagents with hydrophilic groups in order to endow the flash spinning fabrics with anti-static properties. However, a clear disadvantage of this approach is that it will reduce the waterproof performance of the flash spinning non-woven fabric itself. Besides that, this post-processing way only deposits the anti-static agent on the flash spinning fabric, with poor adhesion. As the times of water washing of the flash spinning fabric increases, the anti-static effect will significantly decrease.

### SUMMARY

To address the shortcomings of the prior art mentioned in the background, the present application provides a preparation method for an anti-static flash spinning composite non-woven fabric, including the following steps:
S1: taking anti-static functional masterbatch and a first polymer as spunbond raw materials, obtaining spunbonded fibre with the spunbond raw materials by a spunbond process, and forming a spunbonded fibre web by aggregating the spunbonded fibre;
S2: taking a second polymer as a raw material, obtaining a flash spinning fiber web sheet by a flash spinning process; forming a flash spinning fiber layer by laying the flash spinning fiber web sheet on the spunbonded fibre web to obtain a composite fiber web;
S3: performing a cold pressing treatment and a hot rolling treatment on the composite fiber web sequentially, causing the spunbonded fibre web to form a spunbond layer and causing the flash spinning fiber layer to form a flash spinning layer.

In one embodiment, before S3, performing a pre-heat rolling treatment on the spunbonded fibre web prepared in S1.

In one embodiment, a gram weight of the flash spinning composite non-woven fabric is greater than or equal to 40g/m² and less than or equal to 120g/m²; a gram weight ratio of the spunbond layer to the flash spinning composite non-woven fabric is greater than or equal to 10% and less than or equal to 50%; a gram weight ratio of the flash spinning layer to the flash spinning composite non-woven fabric is greater than or equal to 50% and less than or equal to 90%.

In one embodiment, a weight ratio of the anti-static functional masterbatch to the first polymer is greater than or equal to 0.5% and less than or equal to 10%.

In one embodiment, the first polymer includes one or more from a group of high-density polyethylene, low-density polyethylene, and linear low-density polyethylene; the second polymer includes one or more from a group of high-density polyethylene, low-density polyethylene, and linear low-density polyethylene.

In one embodiment, a raw material component of the anti-static functional masterbatch includes anti-static agent, matrix resin, and filler; where the anti-static agent includes organic amine salt based anti-static agent, and the anti-static functional masterbatch is made of linear low-density polyethylene as a matrix resin and nano calcium carbonate as a filler.

The present application further provides an anti-static flash spinning composite non-woven fabric, where the non-woven fabric is a multi-layer composite structure, which sequentially includes a spunbond layer and a flash spinning layer that is on the spunbond layer.

In one embodiment, a static water pressure resistance of the flash spinning composite non-woven fabric is greater than 9.5 kPa, and its surface resistance is less than 2×10⁸ Ω.

In one embodiment, a gram weight of the flash spinning composite non-woven fabric is greater than or equal to 40g/m² and less than or equal to 120g/m²; a gram weight ratio of the spunbond layer to the flash spinning composite non-woven fabric is greater than or equal to 10% and less than or equal to 50%; a gram weight ratio of the flash spinning layer to the flash spinning composite non-woven fabric is greater than or equal to 50% and less than or equal to 90%.

In one embodiment, the spunbond layer is composed of spunbond fiber, and a raw material component of the spunbond fiber includes anti-static functional masterbatch and a first polymer; the flash spinning layer is composed of flash spinning fiber, and the flash spinning fiber is made of a second polymer; the first polymer includes one or more form a group of high-density polyethylene, low-density polyethylene, and linear low-density polyethylene; the second polymer includes one or more of a group of high-density polyethylene, low-density polyethylene, and linear low-density polyethylene; a weight ratio of the anti-static functional masterbatch to the first polymer is greater than or equal to 0.5% and less than or equal to 10%.

Based on the above, compared with existing technologies, the preparation method of an anti-static flash spinning composite non-woven fabric provided in the present application has the following beneficial effects:
the flash spinning composite non-woven fabric produced in the present application not only has long-lasting anti-static performance, but also has high waterproof performance, high breathability, and good protective performance, which solves a problem of poor anti-static agent adhesion, difficult to maintain the anti-static effect for a long time, and reduced fabric protective performance when a traditional post-treatment process is used to treat the anti-static flash spinning fabric.

The other features and beneficial effects of the present application will be described in the specification, and in part will become apparent from the specification, or may be learned through the implementation modes of the present application. The purpose and other beneficial effects of the present application can be achieved and obtained through the structures specifically indicated in the specification, claims, and drawings.

### BRIEF DESCRIPTION OF DRAWINGS

In order to provide a clearer explanation of the embodiments or technical solutions in the present application or existing technology, a brief introduction will be given to the accompanying drawings required for the description of the embodiments or existing technology. It is obvious that the accompanying drawings in the following description are some embodiments of the present application. For those skilled in the art, other drawings can be obtained based on these drawings without creative work; the positional relationships described in the attached drawings below, unless otherwise specified, are based on the directions indicated by the components in the drawings.
FIG. 1 is a process flowchart of a preparation method of an anti-static flash spinning composite non-woven fabric provided in the present application.
FIG. 2 is a schematic structural diagram of the anti-static flash spinning composite non-woven fabric provided in the present application.
FIG. 3 is a schematic structural diagram of a spunbonded fibre web production equipment used to achieve the preparation method of the flash spinning composite non-woven fabric.
FIG. 4 is a schematic structural diagram of a flash spinning equipment used in the preparation method of the flash spinning composite non-woven fabric.

Numeral reference: 100-flash spinning composite non-woven fabric; 12-spunbond layer; 11-flash spinning layer; 200- spunbonded fibre web production equipment; 300-flash spinning equipment; 21-screw extruder; 22-filter; 23-metering pump; 24-pipeline; 25-spinning manifold; 251-spinneret plate hole; 252-air cooling window; 26-airflow tractor; 27-web forming machine; 271-suction system; 272-first web curtain; 28-hot press roller; 31-nozzle 32-rotatable splitter plate; 33-air amplifier; 34-movable web curtain; 35-cold press roller; 36-vacuum suction device; 37-hot press roll.

### DESCRIPTION OF EMBODIMENTS

In order to clarify the purpose, technical solution, and advantages of the embodiments of the present application, the following will provide a clear and complete description of the technical solution in the embodiments of the present application in combination with the accompanying drawings. Obviously, the described embodiments are a part of the embodiments of the present application, not all of them. The technical features in different embodiments of the present application described below can be combined with each other as long as they do not conflict with each other. Based on the embodiments in the present application, all other embodiments obtained by those skilled in the art without creative work are within the protection scope of the present application.

In the description of the present application, it should be noted that all terms used in the present application (including technical terms and scientific terms) have the same meaning as those commonly understood by those skilled in the art to which the present application belongs, and cannot be understood as limiting the present application. It should be further understood that the terms used in the present application should be understood to have meanings consistent with their meanings in the context and relevant fields of this specification, and should not be interpreted in an idealized or overly formal sense, except as explicitly defined in the present application.

As described in the background, when traditional post-treatment process with anti-static agent is used to treat flash spinning fabric, the anti-static agent has poor adhesion, the anti-static effect is difficult to maintain, and the waterproof performance of the fabric is affected, resulting in a decrease in protective performance, that is, a reduction in the protective performance of the fabric itself. However, if the post-treatment process is not adopted and anti-static masterbatch is added to the polymer chips to endow the flash spinning fabric with anti-static properties, static electricity needs to be applied during a spunbond process to disperse a condensed ultrafine fiber into a fiber web (thus forming a more uniform non-woven fabric). Therefore, if an anti-static agent is added before the flash spinning is laid (i.e. adding anti-static functional masterbatch to the raw material), the anti-static masterbatch will suppress the fiber charging, rendering it difficult for the fiber web to be charged with static electricity, which seriously affects the fiber separation and is not conducive to forming a uniform fiber web.

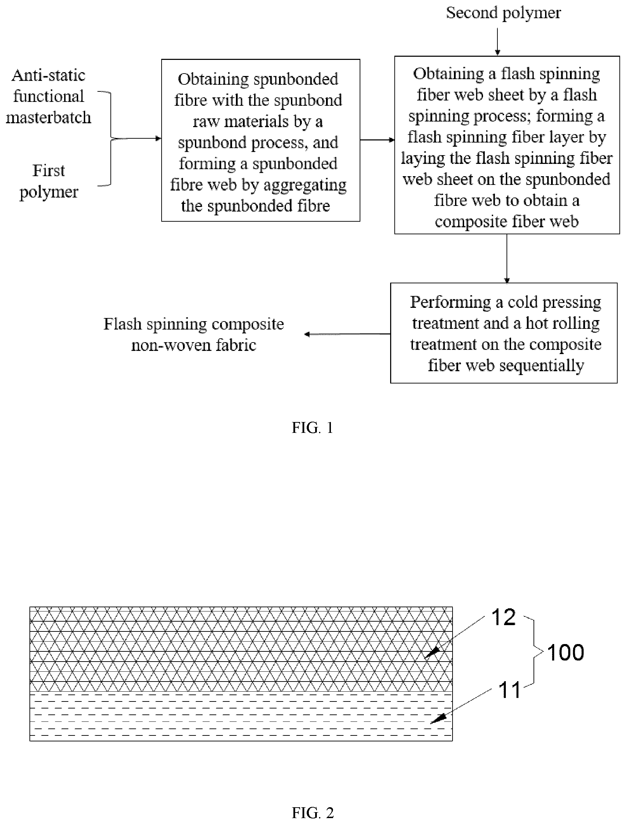

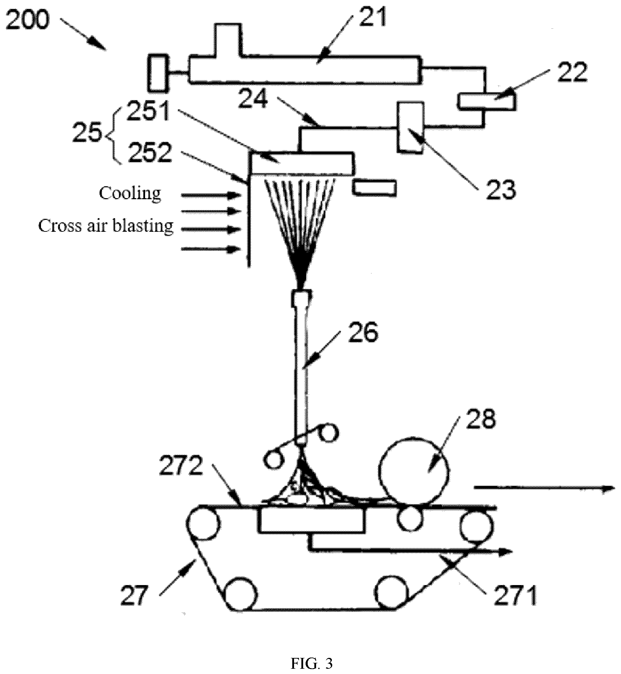

Therefore, the present application provides a preparation method of an anti-static flash spinning composite non-woven fabric. FIG. 1 is a process flowchart of a preparation method of an anti-static flash spinning composite non-woven fabric provided in the present application, FIG. 2 is a schematic structural diagram of the anti-static flash spinning composite non-woven fabric provided in the present application, and FIGs. 3 to 4 are preferred embodiments of the device used to achieve the preparation method of the flash spinning composite non-woven fabric 100.

The preferred implementation solution for the preparation method of the flash spinning composite non-woven fabric 100 provided in the present application is as follows.

As shown in FIG. 1, it includes the following steps:
S1: taking anti-static functional masterbatch and a first polymer as spunbond raw materials, obtaining spunbonded fibre with the spunbond raw materials by a spunbond process, and forming a spunbonded fibre web by aggregating the spunbonded fibre;
S2: taking a second polymer as a raw material, obtaining a flash spinning fiber web sheet by a flash spinning process; forming a flash spinning fiber layer by laying the flash spinning fiber web sheet on the spunbonded fibre web to obtain a composite fiber web;
S3: performing a cold pressing treatment and a hot rolling treatment on the composite fiber web sequentially, causing the spunbonded fibre web to form a spunbond layer 12 and causing the flash spinning fiber layer to form a flash spinning layer 11, that is, obtaining the flash spinning composite non-woven fabric 100 as shown in FIG. 2.

Preferably, before S3, performing a pre-heat rolling treatment on the spunbonded fibre web prepared in S1. The purpose of pre-heat rolling treatment is to allow the spunbonded fibre web to be initially consolidated for easy transportation, and it will not be deformed due to lack of consolidation at S2.

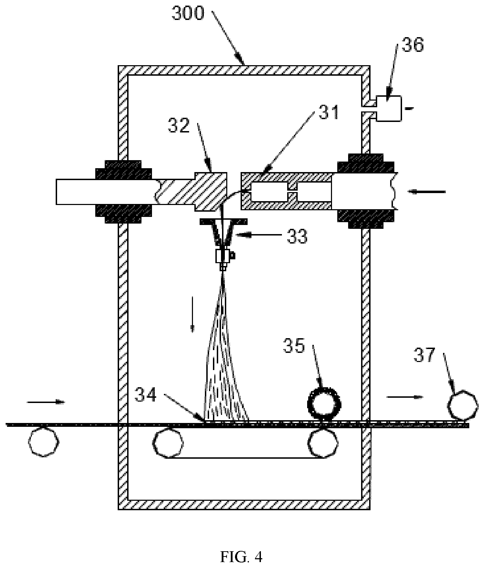

Specifically, as shown in the preparation devices of FIGs. 3 and 4, a specific preparation process and an inventive concept of the anti-static flash spinning composite non-woven fabric 100 are as follows:
preparing with a spunbonded fibre web production equipment 200, taking the anti-static functional masterbatch and the first polymer as the spunbond raw materials. The process of preparing spunbonded fibre web from spunbond raw materials by the spunbond process is as follows: adding the anti-static functional masterbatch to a first polymer chip, and mixing, heating and melting by a melt extrusion device (as shown in FIG. 3, a screw extruder 21). The material is filtered by a filter 22, and then transported to a metering pump 23 for quantitative measurement. It is transported to a spinning manifold 25 through a pipeline 24 and extruded through a spinneret plate hole 251 in the spinning manifold 25, thereby forming a spinning fine flow. The spinning fine flow is stretched into fibers under a strong wind force, and the fibers are condensed on a first web curtain 272 of a web forming machine 27, thereby forming a layer of spunbonded fibre web with anti-static effect.

The spunbonded fibre web is subjected to pre-heat rolling treatment by a hot press roller 28. The preheated and rolled spunbond fiber web is then introduced into a flash spinning equipment 300 by a conveying roller, and the conveyed spunbond fiber web is placed on a movable web curtain 34 of the flash spinning equipment 300.

Then, the second polymer and its solvent are mixed in a high-temperature and high-pressure reaction vessel to dissolve and form a uniform spinning solution. The spinning solution is sprayed out through holes of a nozzle 31, thereby forming a fiber bundle containing many ultrafine fibers. The fiber bundle is deflected and diverged into a mesh like structure by a rotatable splitter plate 32, and the continuously formed flash spinning fiber web sheet, which is laid on the spunbonded fibre web on the movable web curtain 34 to form a flash spinning fiber layer, resulting in a composite fiber web with a certain weight and width (the composite fiber web includes the spunbonded fibre web and the flash spinning fiber layer on the spunbonded fibre web).

The composite fiber web is cold pressed by a cold press roller 35 and then being subjected to a hot rolling process by a hot press roll 37. The fibers are hot-melt bonded and reinforced, so that the spunbonded fibre web forms the spunbond layer 12, and the flash spinning fiber layer forms the flash spinning layer 11, thus producing a dense flash spinning composite non-woven fabric 100.

Where, the ultrafine fibers produced by the flash spinning process form the flash spinning fiber web sheet, which are stacked to form the flash spinning fiber layer. After hot rolling, the fibers are bonded and solidified to form an upper layer of the flash spinning composite non-woven fabric 100, namely, the flash spinning layer 11. The spunbonded fibre web forms the spunbond layer 12, which is a lower layer of the flash spinning composite non-woven fabric 100. The material of the spunbond fiber in the spunbond layer 12 includes the anti-static functional masterbatch and the first polymer, which renders it has long-time anti-static property. Therefore, a combination of the flash spinning layer 11 and the spunbond layer 12 forms the flash spinning composite non-woven fabric 100 with anti-static function.

In summary, the present application combines the flash spinning fiber and the spunbond fiber through hot-rolled spinning, which enables the anti-static agent to be well bonded to the flash spinning composite non-woven fabric without falling off due to water washing, and does not affect the waterproof performance of the flash spinning composite non-woven fabric itself, which will maintain high waterproof performance. The resulting flash spinning composite non-woven fabric not only has long-lasting anti-static performance, but also has high waterproof performance and high breathability, rendering it have good protective performance, solving the defects of poor anti-static agent bonding, difficult to maintain anti-static performance for a long time when traditional post-treatment process is used to treat the anti-static flash spinning fabric, and reduced fabric protective performance.

Selection of various parameters of anti-static flash spinning composite non-woven fabric

Preferably, a gram weight of the flash spinning composite non-woven fabric 100 is greater than or equal to 40g/m² and less than or equal to 120g/m². A weight ratio of the spunbond layer 12 to the flash spinning composite non-woven fabric 100 is greater than or equal to 10% and less than or equal to 50%. A weight ratio of the flash spinning layer 11 to the flash spinning composite non-woven fabric 100 is greater than or equal to 50% and less than or equal to 90%. According to the above settings, the gram weight of the flash spinning composite non-woven fabric 100 is maintained at 40-120 g/m², mainly considering its application scenarios. Its main application is that the gram weight of the fabric used in protective clothing should not be too heavy (greater than a limit range of the present application), indicating that there are many fibers. Although the protective effect will be better, the breathability will decrease with the increase of weight, which will affect the sweat wicking and comfort of wearing, and the cost will also be higher. The weight of the fabric should not be too low (less than the limit range of the present application). If it is too low, it indicates that there are fewer fibers, the protective effect is worse, the mechanical strength of the fabric is lower, and there is a risk of easy damage during use. The reason why the weight of the anti-static spunbond layer 12 is controlled between 10% and 50%, and the weight of the flash spinning layer 11 is controlled between 90% and 50% is that due to thicker spunbond fibers, they cannot provide protective properties (waterproofing) in the composite fabric, mainly providing anti-static properties and some mechanical strength. Therefore, if the gram weight ratio of the spunbond layer 12 is too small (less than the limit range of the present application), it is difficult to achieve the anti-static effect. If the gram weight ratio of the spunbond layer 12 is too high (greater than the limit scope of the present application), the weight ratio of the flash spinning layer 11 will be low, resulting in less flash spinning fibers. The protective performance of the flash spinning composite non-woven fabric 100 is mainly provided by the flash spinning fibers of the flash spinning layer 11. If there are too few flash spinning fiber, the protective performance of the fabric will be poor.

Selection of material and raw material parameters for the flash spinning composite non-woven fabric

Preferably, the first polymer includes one or more from a group of high-density polyethylene, low-density polyethylene, and linear low-density polyethylene, with linear low-density polyethylene being a preferred choice. The second polymer includes one or more from a group of high-density polyethylene, low-density polyethylene, and linear low-density polyethylene, with high-density polyethylene being a preferred choice.

Preferably, a raw material component of the anti-static functional masterbatch includes anti-static agent, matrix resin, and filler. Where the anti-static functional masterbatch uses linear low-density polyethylene as the matrix resin and nano calcium carbonate as the filler. Further preferred, the anti-static agent is an organic amine salt based anti-static agent.

Preferably, a weight ratio of the anti-static functional masterbatch to the first polymer is greater than or equal to 0.5% and less than or equal to 10%. The reason for this setting is that within this range, it can ensure the anti-static performance of finished fabric without affecting a production of the spunbond process. The weight ratio of the anti-static masterbatch is too small (less than the limit range of the present application), resulting in insufficient anti-static performance of the formed spunbond layer 12. Excessive weight ratio of the anti-static masterbatch (beyond the scope of the presents application) can affect the manufacturing of the spunbond fiber and disrupt production stability.

### Selection of preparation method and process parameters

Preferably, in S1, a melting temperature in a melt extrusion device is greater than or equal to 150 °C and less than or equal to 250 °C, the temperature in the spinning manifold 25 is greater than or equal to 200 °C and less than or equal to 250 °C, and a suction fan power of a suction system 271 is set to be greater than or equal to 60% and less than or equal to 95%.

Preferably, the temperature of the hot press roller 28 subjected to pre-heat rolling treatment is greater than or equal to 120 °C and less than or equal to 150 °C, and an oil pressure of the hot press roller 28 is greater than or equal to 0.8 MPa and less than or equal to 2.5 MPa.

Preferably, in S2, a velocity of airflow sprayed by the nozzle 31 is greater than or equal to 8000 m/min and less than or equal to 13000 m/min, the frequency of the rotatable splitter plate 32 is greater than or equal to 20 Hz and less than or equal to 50 Hz, and a forward speed of the movable web curtain 34 is greater than or equal to 20 m/min and less than or equal to 60 m/min.

Preferably, in S3, the temperature of the cold press roller 35 for cold pressing treatment is at room temperature, the pressure of the cold press roller 35 is greater than or equal to 0.2 MPa and less than or equal to 1.5 MPa, a surface temperature of the hot press roll 37 for hot rolling treatment is greater than or equal to 120 °C and less than or equal to 150 °C, the oil pressure of the hot press roll 37 is greater than or equal to 1.5 MPa and less than or equal to 5.0 MPa, and a surface speed of the hot press roll 37 is greater than or equal to 20 m/min and less than or equal to 60 m/min.

The present application further provides the following Examples and Comparative Examples

In order to demonstrate the effectiveness of the finished products prepared by the preparation method of the flash spinning composite non-woven fabric 100 in the present application. The following Examples and Comparative Examples are set up to demonstrate the advantages of the present application through testing and comparison of the relevant performance parameters of the produced products. Specifically, weights and formulas of the Examples and Comparative Examples are shown in Table 1 below.

**Table 1**

| Serial | Spunbond layer 12 (gram weight) | Weight ratio of anti-static masterbatch to spunbond layer 12 raw material chip | Flash spinning layer 11 (gram weight) | Composite non-woven fabric (gram weight) | Spunbond layer 12 (weight ratio) | Spun layer 11 (weight ratio) |
|---|---|---|---|---|---|---|
| | g/m² | % | g/m² | g/m² | % | % |
| Example 1 | 15 | 2 | 40 | 55 | 27.3 | 72.7 |
| Example 2 | 15 | 5 | 40 | 55 | 27.3 | 72.7 |
| Example 3 | 15 | 2 | 50 | 65 | 23.1 | 76.9 |
| Example 4 | 15 | 5 | 50 | 65 | 23.1 | 76.9 |
| Example 5 | 20 | 2 | 40 | 60 | 33.3 | 66.7 |
| Example 6 | 20 | 5 | 40 | 60 | 33.3 | 66.7 |
| Comparative Example 1 | - | - | - | - | - | - |
| Comparative Example 2 | - | - | - | - | - | - |

### Example 1:

### 1. Preparation of spunbonded fibre web

selecting a LLDPE (Linear low density polyethylene) chip from China Petrochemical Corporation, adding anti-static functional masterbatch accounting for 2% of the weight of LLDPE chip, mixing through the screw extruder 21 and heat melting, quantitatively measuring by the metering pump 23, and extruding to form a spinning fine flow. Where the anti-static functional masterbatch is selected from customized masterbatch produced by Da Yue Plastic (with an organic amine salt anti-static agent content of 35%). The heating and melting temperature of the screw extruder 21 is 220 °C, and the temperature of the spinning manifold 25 is set to 210 °C.

The spinning fine flow is stretched into fibers under the strong wind force, and the fibers are condensed on the mesh curtain, thereby forming a layer of spunbond fiber web with anti-static effect. Where, the suction fan power of the suction system 271 is set to 85%.

The spunbonded fibre web is pre-rolled by the hot roller, and then introduced into the flash spinning equipment 300 by a conveyor roller. The spunbonded fibre web is placed on the movable web curtain 34 of the flash spinning equipment 300. The gram weight of the formed spunbonded fibre web is 15g/m². Where, process parameters for the pre-heat rolling treatment are: the temperature of the hot press roller 28 is 132 °C, and the oil pressure of the hot press roller 28 is 1.2MPa.

### 2. Preparation of flash spinning composite non-woven fabric 100

Selecting HDPE chip from Sinopec, and adding HDPE chip with a mass concentration of 15% and a solvent with a mass concentration of 85% (a mixture of 15% monochlorodifluorometha (R22) and 85% dichlorotetrafluoroethane (R114)) into a high-pressure reaction vessel, and raising the temperature to 180 °C. After the heating is completed, nitrogen is introduced and pressurized to 12MPa, and the temperature is raised to 230 °C, stirring for 2 hours at a speed of 100r/min. After the temperature is stable, a uniform spinning solution was formed in the high-pressure reaction vessel.

The uniform spinning solution is sprayed out through the holes of the nozzle 31, and the spinning solution evaporated rapidly. The polymer is cooled and solidified, thereby forming a fiber bundle containing many ultrafine fibers. The fiber bundle is refracted and diverged into a mesh like structure by the rotatable splitter plate 32. The continuously formed flash spinning fiber web sheet is overlaid on the spunbond fiber web on the movable web curtain 34 to form the flash spinning fiber layer, and the two form a composite fiber web. Where, the process parameters for flash spinning are as follows: the spinning solution is sprayed from the nozzle 31 at a speed of 11000m/min, the frequency parameter for the rotatable splitter plate 32 is 35Hz, and the forward speed of the movable web curtain 34 is 45m/min.

After cold pressing, the composite fiber web was subjected to the hot rolling process, and the fibers are solidified by hot melt bonding to produce a dense flash spinning composite non-woven fabric 100. The flash spinning composite non-woven fabric 100 includes the flash spinning layer 11 formed by the flash spinning fiber web and the spunbond layer 12 formed by the spunbonded fibre web. The weight of the flash spinning layer 11 is 40g/m², and the weight of the resulting flash spinning composite non-woven fabric is 55g/m². Where the temperature of the cold press roller 35 for cold pressing is at room temperature, the pressure of the cold press roller 35 for clod pressing is 0.7 MPa, the surface temperature of the hot press roll 37 is 137 °C, the pressure of the hot press roll 37 for heat rolling is 3.2 MPa, and the surface speed of the hot press roll 37 is 47 m/min.

### Example 2

As shown in Table 1, a difference between Example 2 and Example 1 is only that the addition ratio of the anti-static functional masterbatch is changed to 5%, and other steps and process parameters are the same as Example 1.

### Example 3

As shown in Table 1, a difference between Example 3 and Example 1 is only that the weight of the flash spinning layer is 50g/m², and other steps and process parameters are the same as Example 1.

### Example 4

As shown in Table 1, a difference between Example 4 and Example 1 is only that the addition ratio of the anti-static functional masterbatch is changed to 5%, and other steps and process parameters are the same as Example 1.

### Example 5

As shown in Table 1, a difference between Example 5 and Example 1 is only that the weight of the spunbond fiber layer is changed to 20g/m², and other steps and process parameters are the same as Example 1.

### Example 6

As shown in Table 1, a difference between Example 6 and Example 1 is only that the addition ratio of the anti-static functional masterbatch is changed to 5%, and other steps and process parameters are the same as Example 1.

### Comparative Example 1

### 1. Preparation of flash spinning layer 11

selecting a HDPE chip from Sinopec, and adding the HDPE chip with a mass concentration of 15% and a solvent with a mass concentration of 85% (a mixture of 15% monochlorodifluorometha (R22) and 85% dichlorotetrafluoroethane (R114)) into a high-pressure reaction vessel, and raising temperature to 180 °C. After the heating is completed, nitrogen is introduced and pressurized to 12MPa, and the temperature is raised to 230 °C, stirring for 2 hours at a speed of 100r/min. After the temperature is stable, a uniform spinning solution has formed in the high-pressure reaction vessel.

The uniform solution is sprayed out through the holes of the nozzle 31, thereby forming a fiber bundle containing many ultrafine fibers. The fiber bundle is refracted and diverged into a mesh like structure by the rotatable splitter plate 32, and the continuously formed fiber web sheet is laid on the movable web curtain 34, thereby forming the fiber web. Where, the process parameters for flash spinning are as follows: the spinning solution is sprayed from the nozzle 31 at a speed of 11000m/min, the frequency parameter for the rotatable splitter plate 32 is 38Hz, and the forward speed of the movable web curtain 34 is 40m/min.

After cold pressing, the fiber web was subjected to the hot rolling process, and the fibers are strengthened by hot melt bonding, thereby forming a dense flash spinning fabric with a gram weight of 55g/m². Where, the temperature of the cold press roller 35 for cold pressing is at room temperature, the pressure of the cold press roller 35 for cold pressing is 0.7 MPa, the surface temperature of the hot press roll 37 for hot rolling is 138 °C, the pressure of the hot press roll 37 for hot rolling is 3.5 MPa, and the surface speed of the hot press roll 37 is 47 m/min.

### 2. Anti-static post-treatment

TANASTAT^{®} PH, an anti-static treatment agent from Tona Chemical was chosen, according to a ratio of additive: water=0.5:99.5, an aqueous solution was prepared, and then the flash spinning fabric formed in step 1 was immersed into the prepared aqueous solution by impregnation. Then, the impregnated fabric was dried with a stretching and shaping machine to form a flash spinning fabric with anti-static effect. Where, the impregnation process adopts a continuous and uninterrupted manner, with a liquid residence time of about 0.4 seconds for the fabric in the impregnation tank, a drying temperature of 105 °C, and a fan exhaust power of 85%.

### Comparative Example 2

As shown in Table 1, a difference between Comparative Example 2 and Comparative Example 1 is only that the weight of the flash spinning fabric is changed to 65g/m², and other steps and process parameters are the same as Comparative Example 1.

The performance indicators of the finished products prepared from the Examples and the Comparative Examples were tested, and the test results are shown in Table 2 below.

**Table 2**

| Serial | Test data | | | | | | | |
|---|---|---|---|---|---|---|---|---|
| | Weight of finish product | Width of finish product | Permeabili ty | Cross breaking strength | Longitudinal breaking strength | Impermeab ilitv to water | Surface resistance | Surface resistance after 20 times of washing |
| | g/m² | mm | mm/s | N/5cm | N/5cm | kPa | Ω | Ω |
| Testing standard | GB/T24 218.1 | GB/T2421 8.3 | GB/5453-1997 | GB/T3923. 1 | GB/T3923.1 | GB/T4744 | EN 1149-5 | EN 1149-5 |
| Example 1 | 55 | 0.16 | 18.2 | 231 | 203 | 13.2 | 2×10⁷ | 3×10⁷ |
| Example 2 | 55 | 0.17 | 17.6 | 237 | 211 | 13.5 | 3×10⁶ | 4×10⁶ |
| Example 3 | 65 | 0.21 | 12.7 | 325 | 287 | 16.7 | 4×10⁷ | 5×10⁷ |
| Example 4 | 65 | 0.22 | 13.2 | 331 | 275 | 16.2 | 6×10⁶ | 7×10⁶ |
| Example 5 | 60 | 0.19 | 17.3 | 279 | 239 | 12.9 | 1×10⁷ | 1×10⁷ |
| Example 6 | 60 | 0.2 | 17.1 | 283 | 242 | 13.1 | 2×10⁶ | 3×10⁶ |
| Comparative Example 1 | 55 | 0.16 | 10.2 | 212 | 189 | 3.6 | 2×10⁸ | 1×10¹¹ |
| Comparative Example 2 | 65 | 0.2 | 7.3 | 289 | 245 | 5.4 | 3×10⁸ | 2×10¹¹ |

In Table 2, the surface resistance test standard used is BS EN 1149-5 Protective Clothing Electrostatic Properties.

Analyze the results of the Examples and Comparative Examples

The flash spinning composite non-woven fabric produced in this application includes the flash spinning layer 11 and the spunbond layer 12. Its surface resistance is small (less than 2 × 108 Ω), and the surface resistance of the finished fabric remains below 2 × 10⁸ Ω after 20 times of washing. It has good and durable anti-static performance, and its water resistance (i.e., hydrostatic pressure resistance) is greater than 9.5 kPa. It has both high waterproof performance and high breathability, rendering it have good protective performance.

The post-treatment way was used to endow the flash spinning fabric with anti-static function in Comparative Example 1-2. Compared with the Examples, the Comparative Example 1-2 has a higher surface resistance, poorer anti-static performance, and significantly reduced breathability and waterproof performance. In addition, the surface resistance of the finished fabric was increased significantly after washing, and the anti-static performance was decreased significantly.

In summary, the present application combines flash spinning fibers and spunbond fibers through hot rolling spinning, which enables the anti-static agent to be well bonded to the flash spinning composite non-woven fabric without falling off due to water washing, and does not affect the waterproof performance of the flash spinning composite non-woven fabric itself, maintaining high waterproof performance. The resulting flash spinning composite non-woven fabric not only has long-lasting anti-static performance, but also has high waterproof performance and high breathability, rendering it have good protective performance and solving the defects of poor anti-static agent bonding and reduced fabric protection performance when the traditional anti-static agent post-treatment methods was used to treat the flash spinning fabrics.

It should be noted that: in this specification, "gram weight" refers to a weight per unit area of material, measured in g/m².

In the embodiment of the present application, the second polymer solute used in the spinning solution for preparing the flash spinning layer 11 is polyethylene. The first polymer used for preparing the raw material chip of the spunbond layer 12 is polyethylene. In the implementation process of the present application, the raw material chips of the spunbond layer 12 can be made of one or more combinations of a group of high-density polyethylene, low-density polyethylene, and linear low-density polyethylene, with linear low-density polyethylene being the preferred choice. The polyethylene in the spinning solution can be one or more combinations of a group of high-density polyethylene, low-density polyethylene, and linear low-density polyethylene, with high-density polyethylene being the preferred choice.

According to the above design concept, the raw material chip (first polymer) of the spunbond layer 12 can be made of existing polyolefins or a combination of various existing polyolefins, such as linear high-density polyethylene, linear polyethylene, low-density polyethylene, polypropylene, and other conventional polymer materials, including but not limited to polyethylene used in the embodiments. Similarly, the polymer used in the spinning solution for preparing the flash spinning layer 11 can be existing polyolefins or a combination of multiple existing polyolefins, such as linear high-density polyethylene, linear polyethylene, low-density polyethylene, polypropylene, and other conventional polymers used for flash spinning, including but not limited to polyethylene used in the embodiments.

The process flow and production equipment of spunbond process and flash spinning process are both existing technologies. The implementation process of this specification adopts the spunbonded fibre web production equipment 200 and flash spinning equipment 300 as shown in FIG. 3 and FIG. 4 for preparation. The spunbonded fibre web production equipment 200 includes the screw extruder 21, the filter 22, the metering pump 23, the pipeline 24, the spinning manifold 25, the spinneret plate hole 251, an air cooling window 252, an air flow tractor 26, a web forming machine 27 (including the suction system 271 and the first web curtain 272), and the hot press roller 28 and other components. The structure, construction, and workflow of these components are all existing technologies and will not be repeated here. Similarly, the flash spinning equipment 300 includes the nozzle 31, the rotatable splitter plate 32, the air amplifier 33, the movable web curtain 34, the cold press roller 35, the vacuum suction device 36, the hot press roll 37, and other components. The structure, construction, and workflow of these components are all existing technologies and will not be repeated here. According to the design concept of the present application, other existing flash spinning equipment 300 and the spunbonded fibre web production equipment 200 can also be used to respectively prepare the flash spinning fiber web sheet and the spunbonded fibre web, including but not limited to the device structure provided by the preferred solution mentioned above.

Although terms such as anti-static functional masterbatch and flash spinning process are frequently used in this specification, the possibility of using other terms cannot be excluded. The use of these terms is only for the convenience of describing and explaining the essence of the present application. Interpreting them as any additional limitations is contrary to the spirit of the present application. Terms "first", "second", etc. (if any) in the embodiments of the present application, in the claims or the accompanying drawings are used to distinguish similar objects and do not necessarily need to be used to describe a specific order or sequence.

Finally, it should be noted that the above embodiments are only used to illustrate the technical solution of the present application, and not to limit it. Although the present application has been described in detail with reference to the aforementioned embodiments, those skilled in the art should understand that they can still modify the technical solutions described in the aforementioned embodiments, or equivalently replace some or all of the technical features. And these modifications or substitutions do not deviate from the essence of the corresponding technical solutions from the scope of the technical solutions of the various embodiments of the present application.

In addition, those skilled in the art should understand that although there are many problems in the existing technology, each embodiment or technical solution of the present application can be improved in only one or a few aspects, without simultaneously solving all the technical problems listed in the existing technology or background technology. Those skilled in the art should understand that content not mentioned in the claims should not be used as a limitation on the claim.

## Claims

1. A preparation method of an anti-static flash spinning composite non-woven fabric, comprising the following steps:
S1: taking anti-static functional masterbatch and a first polymer as spunbond raw materials, obtaining spunbonded fibre with the spunbond raw materials by a spunbond process, and forming a spunbonded fibre web by aggregating the spunbonded fibre;
S2: taking a second polymer as a raw material, obtaining a flash spinning fiber web sheet by a flash spinning process; forming a flash spinning fiber layer by laying the flash spinning fiber web sheet on the spunbonded fibre web to obtain a composite fiber web;
S3: performing a cold pressing treatment and a hot rolling treatment on the composite fiber web sequentially, causing the spunbonded fibre web to form a spunbond layer and causing the flash spinning fiber layer to form a flash spinning layer.

2. The preparation method of an anti-static flash spinning composite non-woven fabric according to claim 1, wherein before S3, performing a pre-heat rolling treatment on the spunbonded fibre web prepared in S1.

3. The preparation method of an anti-static flash spinning composite non-woven fabric according to claim 1, wherein a gram weight of the flash spinning composite non-woven fabric is greater than or equal to 40g/m² and less than or equal to 120g/m²;
a gram weight ratio of the spunbond layer to the flash spinning composite non-woven fabric is greater than or equal to 10% and less than or equal to 50%; a gram weight ratio of the flash spinning layer to the flash spinning composite non-woven fabric is greater than or equal to 50% and less than or equal to 90%.

4. The preparation method of an anti-static flash spinning composite non-woven fabric according to claim 1, wherein a weight ratio of the anti-static functional masterbatch to the first polymer is greater than or equal to 0.5% and less than or equal to 10%.

5. The preparation method of an anti-static flash spinning composite non-woven fabric according to claim 1, wherein the first polymer comprises one or more from a group of high-density polyethylene, low-density polyethylene, and linear low-density polyethylene;
the second polymer comprises one or more from a group of high-density polyethylene, low-density polyethylene, and linear low-density polyethylene.

6. The preparation method of an anti-static flash spinning composite non-woven fabric according to claim 1, wherein a raw material component of the anti-static functional masterbatch comprises anti-static agent, matrix resin, and filler;
wherein the anti-static agent comprises organic amine salt based anti-static agent, and the anti-static functional masterbatch is made of linear low-density polyethylene as a matrix resin and nano calcium carbonate as a filler.

7. An anti-static flash spinning composite non-woven fabric, wherein the non-woven fabric is a multi-layer composite structure, which sequentially comprises a spunbond layer and a flash spinning layer that is on the spunbond layer.

8. The anti-static flash spinning composite non-woven fabric according to claim 7, wherein a static water pressure resistance of the flash spinning composite non-woven fabric is greater than 9.5 kPa, and its surface resistance is less than 2×10⁸ Q.

9. The anti-static flash spinning composite non-woven fabric according to claim 7 or 8, wherein a gram weight of the flash spinning composite non-woven fabric is greater than or equal to 40g/m² and less than or equal to 120g/m²;
a gram weight ratio of the spunbond layer to the flash spinning composite non-woven fabric is greater than or equal to 10% and less than or equal to 50%;
a gram weight ratio of the flash spinning layer to the flash spinning composite non-woven fabric is greater than or equal to 50% and less than or equal to 90%.

10. The anti-static flash spinning composite non-woven fabric according to claim 7 or 8, wherein the spunbond layer is composed of spunbond fiber, and a raw material component of the spunbond fiber comprises anti-static functional masterbatch and a first polymer; the flash spinning layer is composed of flash spinning fiber, and the flash spinning fiber is made of a second polymer;
the first polymer comprises one or more form a group of high-density polyethylene, low-density polyethylene, and linear low-density polyethylene; the second polymer comprises one or more of a group of high-density polyethylene, low-density polyethylene, and linear low-density polyethylene; a weight ratio of the anti-static functional masterbatch to the first polymer is greater than or equal to 0.5% and less than or equal to 10%.
